# EUROPÄISCHE PATENTSCHRIFT

(11) **EP 3 866 157 B1**
(45) Veröffentlichungstag und Bekanntmachung des Hinweises auf die Patenterteilung: **03.04.2024**
(21) Anmeldenummer: 20157073.6
(22) Anmeldetag: 13.02.2020
(51) Int. Cl.: G10L 15/22

(54) **ELEKTRONISCHE ASSISTENZVORRICHTUNG UND BETRIEBSVERFAHREN**
ELECTRONIC ASSISTANCE DEVICE AND METHOD OF OPERATION
DISPOSITIF D'AIDE ÉLECTRONIQUE ET PROCÉDÉ DE FONCTIONNEMENT

(43) Veröffentlichungstag der Anmeldung: 18.08.2021
(73) Patentinhaber: Deutsche Telekom AG, 53113 Bonn (DE)
(72) Erfinder: BÖTTGER, Dirk A., 53343 Wachtberg (DE); RALF, Henning, 50389 Wesseling (DE); KNOLL, Mirko, 63322 Rödermark (DE); HOCHSTÄTTER, Bernhard, 64289 Darmstadt (DE); FLADDA, Oliver, 64367 Mühltal (DE); FUGMANN, Thorsten, 64287 Darmstadt (DE)
(74) Vertreter: RDL Patentanwälte PartG mbB

(56) Entgegenhaltungen:
- WO-A1-2016/057268
- WO-A1-2017/217978
- US-B1- 9 368 105

## Beschreibung

Die Erfindung betrifft ein Verfahren zum Betreiben einer elektronischen Assistenzvorrichtung, bei dem ein Lautsprecher einer elektronischen Assistenzvorrichtung einen von einer ausschließlich ein erstes Aufweckwort akzeptierenden sprachgesteuerten ersten Assistenzanwendung der Assistenzvorrichtung bereitgestellten ersten Ausgabeaudiostrom in einer Vordergrundlautstärke ausgibt, ein Mikrofon der elektronischen Assistenzvorrichtung fortlaufend einen Umgebungsschall erfasst und den erfassten Umgebungsschall als einen Eingabeaudiostrom bereitstellt und ein sprachgesteuertes Aufweckmodul der Assistenzvorrichtung in einer in dem bereitgestellten Eingabeaudiostrom erkannten Spracheingabe eines Nutzers ein von einer von der ersten Assistenzanwendung verschiedenen zweiten Assistenzanwendung der Assistenzvorrichtung ausschließlich akzeptiertes zweites Aufweckwort als einziges Aufweckwort erkennt. Ferner betrifft die Erfindung eine elektronische Assistenzvorrichtung und ein Computerprogrammprodukt für eine elektronische Assistenzvorrichtung.

Elektronische Assistenzvorrichtungen, kurz Assistenzvorrichtungen, sind im Stand der Technik in unterschiedlichen Ausgestaltungen bekannt und dienen einem Ausgeben von Ausgabeaudioströmen, beispielsweise einem Abspielen von Musikstücken. Zu den elektronischen Assistenzvorrichtungen gehören dedizierte Geräte, welche gewöhnlich als Smart Speaker oder auch als intelligenter persönlicher Assistent (Intelligient Personal Assistant, IPA) bezeichnet werden, ebenso wie universelle mobile Endgeräte (User Equipment, UE), beispielsweise Smartphones und Tablets.

Eine elektronische Assistenzvorrichtung umfasst gewöhnlich eine sprachgesteuerte Assistenzanwendung, kurz Assistenzanwendung, welche in der elektronischen Assistenzvorrichtung als eine Software installiert ist und einen Ausgabeaudiostrom oder eine Mehrzahl von Ausgabeaudioströmen bereitstellt, wenn sie von der elektronischen Assistenzvorrichtung ausgeführt wird. Zu den sprachgesteuerten Assistenzanwendungen gehören beispielsweise Amazon Alexa, Apple Siri, Google Assistant und Telekom Magenta. In der Regel umfasst die sprachgesteuerte Assistenzanwendung eine Sprachschnittstelle (Voice User Interface, VUI) und ein mit der Sprachschnittstelle verbundenes Backend. Beispielsweise werden die Sprachschnittstellen bzw. Backends von Amazon Alexa als AVS (Amazon Voice Services) bzw. Amazon AVS Cloud und von Telekom Magenta als CVI (Common Voice Interface) bzw. Magenta Voice Cloud bezeichnet.

Die sprachgesteuerte Assistenzanwendung akzeptiert ein eindeutig definiertes Aufweckwort (Wake-Up Word, WUW). Beipielsweise akzeptieren Amazon Alexa, Apple Siri, Google Assistant und Telekom Magenta jeweils die Aufweckwörter "Alexa", "Siri", "Ok google" und "Hallo Magenta". Ein Nutzer kann die sprachgesteuerte Assistenzanwendung jederzeit durch eine das akzeptierte Aufweckwort umfassende Spracheingabe, d. h. durch Aussprechen des Aufweckworts, aufwecken.

Ferner akzeptiert die sprachgesteuerte Assistenzanwendung eine Mehrzahl von Befehlswörtern. Beispielsweise umfassen akzeptierte Befehlswörter "Stop", "Play", "Pause", "Resume", "Next Track", "Previous Track", "Seek Forward", "Seek Backward", "Lauter", "Leiser" und "Mute". Der Nutzer kann die sprachgesteuerte Assistenzanwendung durch eine ein akzeptiertes Befehlswort umfassende Spracheingabe, d. h. durch Aussprechen eines Befehlsworts, steuern, d. h. betätigen.

In der Regel steuert der Nutzer die elektronische Assistenzvorrichtung durch eine Spracheingabe, welche ein akzeptiertes Aufweckwort und zumindest ein auf das Aufweckwort folgendes akzeptiertes Befehlswort umfasst. Ein Aufweckwort oder ein Befehlswort wird als akzeptiert bezeichnet, wenn die sprachgesteuerte Assistenzanwendung das Aufweckwort oder das Befehlswort definiert und in der Spracheingabe des Nutzers erkennt.

US 9,368,105 B1 offenbart eine sprachgesteuerte Assistenzvorrichtung mit mehreren Betriebsmodi. Zwar erkennt die Assistenzvorrichtung in jedem Betriebsmodus das definierte Aufweckwort. Jedoch unterscheiden sich die Betriebsmodi durch die jeweils erkannten Befehlsworte. In einem Schlummermodus der Assistenzvorrichtung kann beispielsweise die Anzahl der erkannten Befehlsworte stark reduziert sein, beispielsweise auf ein einziges Befehlswort zum Beenden des Schlummermodus. Auf diese Weise kann die Assistenzvorrichtung dazu gezwungen werden, in einem Gespräch zufällig enthaltene Befehlsworte zu ignorieren.

Die sprachgesteuerte Assistenzanwendung stellt eine Mehrzahl von Ausgabeaudioströmen bereit. Beispielsweise stellt Telekom Magenta die Ausgabeaudioströme Dialog, DECT Telephony, Timer, Pairing, Radio, Bluetooth Streaming, Spotify Connect und Amazon Alexa die Audiodatenströme Alexa Dialog, Conversation, Telephony, Alerts, Notifications, Amazon Prime Music, Spotify via Alexa, Radio bereit.

Wenn eine Assistenzvorrichtung zwei oder mehr sprachgesteuerte Assistenzanwendungen umfasst und einen von einer sprachgesteuerten ersten Assistenzanwendung bereitgestellten Ausgabeaudiostrom ausgibt, kann eine Spracheingabe des Nutzers zum Steuern des ausgegebenen Ausgabeaudiostroms zwar ein von der sprachgesteuerten ersten Assistenzanwendung akzeptiertes Befehlswort, aber irrtümlich ein von einer sprachgesteuerten weiteren Assistenzanwendung akzeptiertes, nicht aber von der sprachgesteuerten ersten Assistenzanwendung akzeptiertes Aufweckwort umfassen.

Eine solche fehlerhafte Spracheingabe wird von der elektronischen Assistenzvorrichtung konsequent ignoriert und steuert daher die elektronische Assistenzvorrichtung nicht. Die ausbleibende Steuerwirkung führt aber insbesondere nach einer Mehrzahl von vergeblichen Spracheingaben zu einer starken Frustration des Nutzers, was mit einer großen Unzufriedenheit des Nutzers mit der elektronischen Assistenzvorrichtung einhergeht.

Es ist daher eine Aufgabe der Erfindung, ein Verfahren zum Betreiben einer elektronischen Assistenzvorrichtung vorzuschlagen, bei welchem ein Nutzer die elektronische Assistenzvorrichtung auch durch eine irrtümlich fehlerhafte Spracheingabe erwartungsgemäß steuern kann. Ferner ist es Aufgabe der Erfindung, eine elektronische Assistenzvorrichtung und ein Computerprogrammprodukt für eine elektronische Assistenzvorrichtung bereitzustellen.

Ein Gegenstand der Erfindung ist ein Verfahren zum Betreiben einer elektronischen Assistenzvorrichtung, bei dem ein Lautsprecher einer elektronischen Assistenzvorrichtung einen von einer ausschließlich ein erstes Aufweckwort akzeptierenden sprachgesteuerten ersten Assistenzanwendung der Assistenzvorrichtung bereitgestellten ersten Ausgabeaudiostrom in einer Vordergrundlautstärke ausgibt, ein Mikrofon der elektronischen Assistenzvorrichtung fortlaufend einen Umgebungsschall erfasst und den erfassten Umgebungsschall als einen Eingabeaudiostrom bereitstellt und ein sprachgesteuertes Aufweckmodul der Assistenzvorrichtung in einer in dem bereitgestellten Eingabeaudiostrom erkannten Spracheingabe eines Nutzers ein von einer von der ersten Assistenzanwendung verschiedenen zweiten Assistenzanwendung der Assistenzvorrichtung ausschließlich akzeptiertes zweites Aufweckwort als einziges Aufweckwort erkennt.

Mit dem Verfahren wird eine elektronische Assistenzvorrichtung betrieben, welche zwei Assistenzanwendungen umfasst. Die Begriffe "erste" und "zweite" etablieren keine Reihenfolge und können durchgängig vertauscht werden, ohne den Erfindungsgegenstand zu ändern. Vielmehr dienen die Begriffe "erste" und "zweite" dem Unterscheiden der beiden voneinander separaten und verschiedenen Assistenzanwendungen. Es widerspricht daher dem Wesen der Erfindung, die erste Assistenzanwendung und die zweite Assistenzanwendung als verschiedene Bezeichnungen derselben Assistenzanwendung oder als zwei separate Instanzen derselben Assistenzanwendung zu verstehen.

Die Erfindung ist nicht auf zwei Assistenzanwendungen beschränkt. Vielmehr kann die elektronische Assistenzvorrichtung auch drei oder mehr als drei Assistenzanwendungen umfassen.

Der Eingabeaudiostrom wird von dem Mikrofon fortlaufend bereitgestellt und umfasst jede Spracheingabe des Nutzers, während der Nutzer in einer Erfassungsreichweite des Mikrofons angeordnet ist. Eine Spracheingabe des Nutzers zum Steuern der elektronischen Assistenzvorrichtung umfasst ein von einer Assistenzanwendung der Assistenzvorrichtung akzeptiertes Aufweckwort und ein auf das Aufweckwort folgendes von der Assistenzanwendung akzeptiertes Befehlswort. Die Spracheingabe ist ein Abschnitt des Eingabeaudiostroms. Das Aufweckwort und das Befehlswort sind aufeinanderfolgende Abschnitte der Spracheingabe.

Der Ausgabeaudiostrom wird von dem Lautsprecher in der Vordergrundlautstärke ausgegeben und kann beispielsweise ein Radioprogramm umfassen, welches von einer Assistenzanwendung bereitgestellt wird. Der Nutzer startet eine Ausgabe eines Ausgabeaudiostroms mittels einer Spracheingabe. Ein gestarteter Ausgabeaudiostrom kann als eine Aktivität der elektronischen Assistenzvorrichtung bezeichnet werden. Die Aktivität besteht fort, bis der Ausgabeaudiostrom gestoppt wird. Ein gestarteter Ausgabeaudiostrom wurde noch nicht gestoppt.

Die Vordergrundlautstärke ist eine von dem Nutzer bestimmte Lautstärke der elektronischen Assistenzvorrichtung. Die Vordergrundlautstärke beträgt also 100% der Lautstärke der elektronischen Assistenzvorrichtung. Bevorzugt stellt der Nutzer die Lautstärke der elektronischen Assistenzvorrichtung jederzeit mittels einer Spracheingabe ein.

Das von der ersten Assistenzanwendung und der zweiten Assistenzanwendung akzeptierte Befehlswort kann als ein universelles Befehlswort bezeichnet werden. Zusätzlich zu den universellen Befehlswörtern kann die erste Assistenzanwendung weitere Befehlswörter akzeptieren, welche von der zweiten Assistenzanwendung nicht akzeptiert werden, und umgekehrt. Ein ausschließlich entweder von der ersten Assistenzanwendung oder der zweiten Assistenzanwendung akzeptiertes Befehlswort kann als ein spezielles Befehlswort bezeichnet werden.

Die hier betrachteten universellen Befehlswörter sind Folgebefehlswörter, welche einen gestarteten Ausgabeaudiostrom voraussetzen. Zu den Folgebefehlswörtern gehören ein Stoppbefehlswort zum Stoppen des gestarteten Ausgabeaudiostroms und insbesondere zumindest ein Einstellbefehlswort zum Ändern eines Zustands des Ausgabeaudiostroms.

Wenn der Nutzer das Ausgeben des Ausgabeaudiostroms steuern will und vergessen hat, mit welcher von den beiden Assistenzanwendungen er den Ausgabeaudiostrom gestartet hat, kann die entsprechende Spracheingabe des Nutzers irrtümlich das von der anderen Assistenzanwendung akzeptierte Aufweckwort umfassen, welches mit dem ausgegebenen Ausgabeaudiostrom inkompatibel ist.

Erfindungsgemäß erkennt ein Steuermodul der elektronischen Assistenzvorrichtung in der Spracheingabe ein auf das zweite Aufweckwort folgendes von der ersten Assistenzanwendung und von der zweiten Assistenzanwendung akzeptiertes Befehlswort und steuert den ersten Ausgabeaudiostrom mittels der erkannten Spracheingabe. Mit anderen Worten ignoriert das Steuermodul das zweite Aufweckwort, welches von der ersten Assistenzanwendung nicht akzeptiert wird. Stattdessen weckt das Steuermodul die erste Assistenzanwendung auf und leitet den an das zweite Aufweckwort anschließenden und das universelle Befehlswort umfassenden Endabschnitt der Spracheingabe an die erste Assistenzanwendung, genauer gesagt an eine Sprachschnittstelle (Voice User Interface, VUI) der ersten Assistenzanwendung, weiter. Die erste Assistenzanwendung ändert einen Zustand des ersten Ausgabeaudiostroms entsprechend dem universellen Befehlswort.

Mit dem erfindungsgemäßen Betriebsverfahren wird die von dem Nutzer beabsichtigte Steuerwirkung auch mittels eines inkompatiblen Aufweckworts erreicht. Das erfindungsgemäße Betriebsverfahren geht davon aus, dass der Nutzer mit dem universellen Befehlswort den in der Vordergrundlautstärke ausgegebenen Ausgabeaudiostrom steuern, d. h. einen Zustand oder eine Eigenschaft des Ausgabeaudiostroms ändern, will. Kurz gesagt, versteht die elektronische Assistenzvorrichtung die Spracheingabe des Nutzers im Fall eines universellen Befehlsworts als auf den in der Vordergrundlautstärke ausgegebenen Ausgabeaudiostrom bezogen.

Es wird angemerkt, dass mittels des kompatiblen Aufweckworts die von dem Nutzer beabsichtigte Steuerwirkung in einem bekannten Betriebsverfahren der elektronischen Assistenzvorrichtung selbstverständlich ebenfalls erreicht wird.

In einer bevorzugten Ausführungsform leitet das Steuermodul aus zumindest zwei von jeweils ausschließlich einem Kanal aus zwei oder mehr als zwei von dem Steuermodul definierten Kanälen zugehörigen gestarteten ersten und zweiten Ausgabeaudioströmen denjenigen Ausgabeaudiostrom dem Lautsprecher zum Ausgeben in der Vordergrundlautstärke zu, dessen Kanal unter allen Kanälen mit zumindest einem gestarteten Ausgabeaudiostrom eine höchste Priorität aufweist und der unter den gestarteten Ausgabeaudioströmen dieses Kanals als letzter Ausgabeaudiostrom gestartet wurde. Einem Kanal zugehörige gestartete Ausgabeaudioströme können von der ersten Assistenzanwendung oder der zweiten Assistenzanwendung bereitgestellt werden, d. h. die Kanalzugehörigkeit der gestarteten Ausgabeaudioströme ist unabhängig von der bereitstellenden Assistenzanwendung. Jeder gestartete Ausgabeaudiostrom ist ausschließlich einem Kanal zugehörig.

Kurz gesagt bestimmt das Steuermodul zunächst jeden Kanal mit zumindest einem gestarteten Ausgabeaudiostrom. Ein Kanal mit zumindest einem gestarteten Ausgabeaudiostrom kann als aktiver Kanal bezeichnet werden. Unter den aktiven Kanälen bestimmt das Steuermodul dann den Kanal mit der höchsten Priorität. Den zuletzt gestarteten Ausgabeaudiostrom des aktiven Kanals mit der höchsten Priorität leitet das Steuermodul dem Lautsprecher in einer Vordergrundlautstärke zu. Infolgedessen wird höchstens ein Ausgabeaudiostrom in der Vordergrundlautstärke ausgegeben.

In einer vorteilhaften Ausführungsform leitet das Steuermodul aus zumindest zwei von jeweils ausschließlich einem Kanal aus zwei oder mehr als zwei von dem Steuermodul definierten Kanälen zugehörigen gestarteten ersten und zweiten Ausgabeaudioströmen denjenigen Ausgabeaudiostrom dem Lautsprecher zum Ausgeben in einer Hintergrundlautstärke zu, dessen Kanal unter allen Kanälen mit zumindest einem gestarteten Ausgabeaudiostrom eine zweithöchste Priorität aufweist und der unter den gestarteten Ausgabeaudioströmen dieses Kanals als letzter Ausgabeaudiostrom gestartet wurde. Hier bestimmt das Steuermodul unter den aktiven Kanälen den Kanal mit der zweithöchsten Priorität und leitet den zuletzt gestarteten Ausgabeaudiostrom des aktiven Kanals mit zweithöchster Priorität dem Lautsprecher in einer Hintergrundlautstärke zu. Infolgedessen wird höchsten ein Ausgabeaudiostrom in der Hintergrundlautstärke ausgegeben.

Die Hintergrundlautstärke ist geringer als die Vordergrundlautstärke und beträgt beispielsweise 10% der Lautstärke der elektronischen Assistenzvorrichtung. Der Lautsprecher gibt demnach zwei Ausgabeaudioströme gleichzeitig mit verschiedenen Lautstärken aus. Infolge der verschiedenen Lautstärken wird ein Wahrnehmen des in der Vordergrundlautstärke ausgegebenen Ausgabeaudiostroms nicht oder zumindest nicht wesentlich durch den in der Hintergrundlautstärke ausgegebenen Ausgabeaudiostrom gestört.

Idealerweise leitet das Steuermodul aus zumindest zwei von jeweils ausschließlich einem Kanal aus zwei oder mehr als zwei von dem Steuermodul definierten Kanälen zugehörigen gestarteten ersten und zweiten Ausgabeaudioströmen denjenigen Ausgabeaudiostrom dem Lautsprecher zum Ausgeben in einer Nulllautstärke zu, dessen Kanal unter allen Kanälen mit zumindest einem gestarteten Ausgabeaudiostrom eine höchstens dritthöchste Priorität aufweist und der unter den gestarteten Ausgabeaudioströmen dieses Kanals als letzter Ausgabeaudiostrom gestartet wurde. Die Nulllautstärke beträgt 0% der Lautstärke der elektronischen Assistenzvorrichtung. Zuletzt gestartete Ausgabeaudioströme von aktiven Kanälen mit einer geringeren Priorität als der höchsten Priorität und der zweithöchsten Priorität werden demnach stumm geschaltet. Auf diese Weise wird eine Wahrnehmung des in der Vordergrundlautstärke ausgegebenen Ausgabeaudiostroms oder des in der Hintergrundlautstärke ausgegebenen Ausgabeaudiostroms nicht gestört.

Das Steuermodul kann alle ausschließlich einem Kanal aus zwei oder mehr als zwei von dem Steuermodul definierten Kanälen zugehörigen gestarteten ersten und zweiten Ausgabeaudioströme in einem LIFO-Stapel verwalten. Jeder aktive Kanal kann eine Mehrzahl von gestarteten ersten und zweiten Ausgabeaudioströmen umfassen. Der LIFO (Last In First Out)-Stapel umfasst eine Mehrzahl von Positionen, welche beginnend mit eins durchnummeriert sind. Der zuletzt gestartete Ausgabeaudiostrom ist an Position eins, der als zweitletzter gestartete Ausgabeaudiostrom ist an Position zwei usw. Wenn der zuletzt gestartete Ausgabeaudiostrom gestoppt wird, wird der als zweitletzter gestartete Ausgabeaudiostrom zum zuletzt gestarteten Ausgabeaudiostrom und rückt vor auf die Position eins. Weitere im LIFO-Stapel verwaltete Ausgabeaudioströme rücken ebenfalls um eine Position vor. Demgegenüber wird ein noch nicht im LIFO-Stapel verwalteter neu gestarteter Ausgabeaudiostrom zum zuletzt gestarteten Ausgabeaudiostrom und erhält die Position eins. Der zuvor zuletzt gestartete Ausgabeaudiostrom wird zum als zweitletzter gestarteten Ausgabeaudiostrom und weicht auf die Position zwei zurück. Weitere im LIFO-Stapel verwaltete Ausgabeaudioströme weichen ebenfalls um eine Position zurück.

In weiteren Ausführungsformen empfängt ein Kommunikationsmodul der Assistenzvorrichtung einen von einer Assistenzanwendung bereitgestellten Ausgabeaudiostrom von einem in einem externen Netzwerk angeordneten Backend der Assistenzanwendung. Das externe Netzwerk ist bevorzugt das Internet. Das Backend ist vorteilhaft in einer Internet-Cloud angeordnet. Beispielsweise wird der Ausgabeaudiostrom von einem Streaming-Dienst in der Internet-Cloud bereitgestellt. Zu den Streaming-Diensten gehören Internetradios, Audio-ondemand-Dienste, Musikabonnementdienste, Livestream-Dienste und dergleichen.

Gegenstand der Erfindung ist auch eine elektronische Assistenzvorrichtung, welche eine ausschließlich ein erstes Aufweckwort akzeptierende und einen ersten Ausgabeaudiostrom bereitstellende sprachgesteuerte erste Assistenzanwendung, eine ausschließlich ein zweites Aufweckwort akzeptierende und einen zweiten Ausgabeaudiostrom bereitstellende von der sprachgesteuerten ersten Assistenzanwendung verschiedene sprachgesteuerte zweite Assistenzanwendung, einen Lautsprecher zum Ausgeben des ersten Ausgabeaudiostroms und des zweiten Ausgabeaudiostroms, ein Mikrofon zum fortlaufenden Erfassen eines Umgebungsschalls und zum Bereitstellen des erfassten Umgebungsschalls als einen Eingabeaudiostrom, ein sprachgesteuertes Aufweckmodul zum Erkennen des ersten Aufweckworts und des zweiten Aufweckworts in einer in dem bereitgestellten Eingabeaudiostrom erkannten Spracheingabe eines Nutzers.

Erfindungsgemäß umfasst die Assistenzvorrichtung ein Steuermodul zum Erkennen eines von der ersten Assistenzanwendung und von der zweiten Assistenzanwendung akzeptierten Befehlsworts in der erkannten Spracheingabe und ist konfiguriert, ein erfindungsgemäßes Verfahren auszuführen. Das Steuermodul erkennt ein universelles Befehlswort in der Spracheingabe des Nutzers und verhält sich wie von dem Nutzer beabsichtigt, wenn das Aufweckwort der Spracheingabe von einer einen im Vordergrund ausgegebenen Ausgabeaudiostrom bereitstellenden Assistenzanwendung nicht akzeptiert wird, d. h. mit der bereitstellenden Assistenzanwendung inkompatibel ist.

Idealerweise definiert das Steuermodul zwei oder mehr als zwei Kanäle, welche verschiedene Prioritäten aufweisen und jeweils eine Mehrzahl von ersten und zweiten Ausgabeaudioströmen umfassen, welche jeweils ausschließlich einem Kanal aus den zwei oder mehr als zwei Kanälen zugehörig sind. Die Zugehörigkeit eines Ausgabeaudiostroms zu einem Kanal ist unabhängig von seinem jeweils aktuellen Zustand konstant. Der Ausgabeaudiostrom bleibt dem Kanal als gestoppter Ausgabeaudiostrom und als gestarteter Ausgabeaudiostrom zugehörig. Die zwei oder mehr Kanäle sind in Bezug auf die Ausgabeaudioströme disjunkt. Die verschiedenen Prioritäten implizieren eine Reihenfolge der Kanäle. Die definierten Kanäle bilden eine die erste Assistenzanwendung und die zweite Assistenzanwendung übergreifende Ordnung der ersten und zweiten Ausgabeaudioströme. Das Steuermodul umfasst eine zu der Ordnung korrespondierende Steuerlogik, welche ein gleichzeitiges Ausführen der ersten Assistenzanwendung und der zweiten Assistenzanwendung ermöglicht.

Vorteilhaft umfasst jeder definierte Kanal eine Mehrzahl von gleichartigen Ausgabeaudioströmen. Die gleichartigen Ausgabeaudioströme haben jeweils gleichartige Zustände und können daher in Bezug auf die gleichartigen Zustände gleichartig gesteuert werden. Dagegen umfassen verschiedene Kanäle jeweils ungleichartige Ausgabeaudioströme. Die Steuerlogik des Steuermoduls kann daher spezifische Kanalsteuerungen umfassen. Zudem kann die Steuerlogik des Steuermoduls auf diese Weise einfach sicherstellen, dass gleichartige Ausgabeaudioströme nicht gleichzeitig ausgegeben werden.

In einer bevorzugten Ausführungsform definiert das Steuermodul vier Kanäle, welche einen Dialogkanal mit einer höchsten Priorität, einen Telefoniekanal mit einer zweithöchsten Priorität, einen Ereigniskanal mit einer zweitniedrigsten Priorität und einen Inhaltskanal mit einer niedrigsten Priorität umfassen. Diese vier Kanäle sind ausreichend, um die ersten und zweiten Ausgabeaudioströme der ersten Assistenzanwendung und zweiten Assistenzanwendung nach ihrer Gleichartigkeit bzw. Ungleichartigkeit zu ordnen.

In vielen Ausführungsformen definiert das Steuermodul für jeden definierten Kanal eine Befehlsgruppe mit von der ersten Assistenzanwendung und der zweiten Assistenzanwendung akzeptierten Befehlsworten. Die kanalspezifische Befehlsgruppe umfasst universelle Befehlsworte, welche in Bezug auf die erste Assistenzanwendung und die zweite Assistenzanwendung eine identische Steuerwirkung erreichen. Die kanalspezifische Befehlsgruppe erleichtert dem Steuermodul das Erkennen eines universellen Befehlsworts.

In weiteren Ausführungsformen definiert das Steuermodul für jeden Ausgabeaudiostrom eine Übergangstabelle, welche jedem möglichen Zustand des Ausgabeaudiostroms einen oder mehrere mit dem Zustand kompatible Befehlsworte zuordnet. Die Übergangstabelle ermöglicht dem Steuermodul zu entscheiden, ob ein Befehlswort der Spracheingabe zu einem aktuellen Zustand des Ausgabeaudiostroms passt und die beabsichtigte Änderung des Zustands möglich ist. Wenn das Befehlswort der Spracheingabe mit dem aktuellen Zustand des zu steuernden Ausgabeaudiostroms inkompatibel ist, kann das Steuermodul ein Weiterleiten der Spracheingabe unterlassen.

Idealerweise umfasst die Assistenzvorrichtung ein Kommunikationsmodul zum Empfangen eines Ausgabeaudiostroms von einem in einem externen Netzwerk angeordneten Backend der Assistenzanwendung. Das Kommunikationsmodul ermöglicht der Assistenzvorrichtung einen Zugriff auf externe Ressourcen, welche beispielsweise in einer Internet-Cloud angeordnet sind. In der Internet-Cloud können eine Sprachschnittstelle der Assistenzanwendung und das Backend angeordnet sein. Das Backend kann den Ausgabeaudiostrom für die Assistenzanwendung bereitstellen.

Noch ein Gegenstand der Erfindung ist ein Computerprogrammprodukt für eine elektronische Assistenzvorrichtung, welches ein von einer elektronischen Assistenzvorrichtung lesbares Speichermedium mit einem in dem Speichermedium gespeicherten und von der elektronischen Assistenzvorrichtung ausführbaren Programmcode umfasst. Das Speichermedium erlaubt ein Installieren des Programmcodes in der elektronischen Assistenzvorrichtung oder ein Zugreifen der elektronischen Assistenzvorrichtung auf den Programmcode auf jede bekannte Weise. Das Computerprogrammprodukt dient dem Aufsetzen oder Konfigurieren der elektronischen Assistenzvorrichtung.

Erfindungsgemäß veranlasst der Programmcode die elektronische Assistenzvorrichtung, ein erfindungsgemäßes Verfahren auszuführen, wenn er von einem Prozessor der elektronischen Assistenzvorrichtung ausgeführt wird. Der Programmcode macht die elektronische Assistenzvorrichtung zu der erfindungsgemäßen elektronischen Assistenzvorrichtung.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

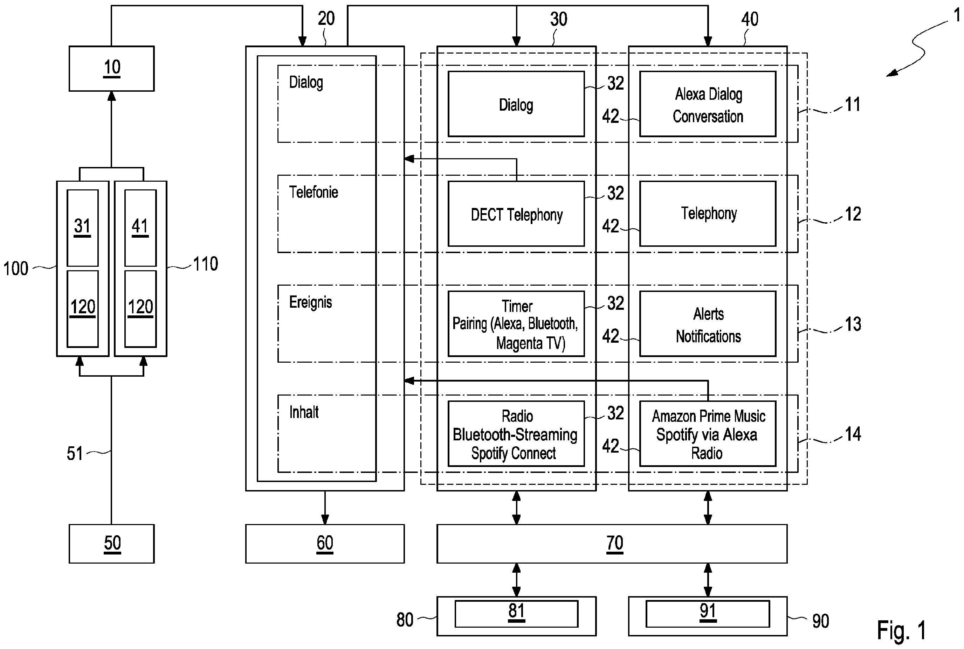

- Fig. 1: zeigt ein Blockdiagramm einer elektronischen Assistenzvorrichtung in einer Ausführungsform der vorliegenden Erfindung.

Fig. 1 zeigt ein Blockdiagramm einer elektronischen Assistenzvorrichtung 1 in einer Ausführungsform der vorliegenden Erfindung. Die elektronische Assistenzvorrichtung 1 umfasst eine ausschließlich ein erstes Aufweckwort 31 akzeptierende und einen ersten Ausgabeaudiostrom 32 bereitstellende sprachgesteuerte erste Assistenzanwendung 30 und eine ausschließlich ein zweites Aufweckwort 41 akzeptierende und einen zweiten Ausgabeaudiostrom 42 bereitstellende zweite Assistenzanwendung 40, welche von der sprachgesteuerten ersten Assistenzanwendung 30 verschieden ist.

Beispielhaft ist die erste Assistenzanwendung 30 Telekom Magenta und die zweite Assistenzanwendung 40 Amazon Alexa. Im Beispiel akzeptieren Telekom Magenta und Amazon Alexa jeweils ausschließlich das erste Aufweckwort 31 "Hallo Magenta" bzw. das zweite Aufweckwort 41 "Alexa".

Die elektronische Assistenzvorrichtung 1 umfasst auch ein Kommunikationsmodul 70 zum Empfangen eines Ausgabeaudiostroms 32, 42 von einem in einem externen Netzwerk angeordneten ersten oder zweiten Backend 80, 90 der Assistenzanwendung 30, 40. Erste und zweite Sprachschnittstellen (VUI) 81, 91, im Beispiel CVI bzw. AVS, der beiden Assistenzanwendungen 30, 40 sind zumindest teilweise jeweils von dem ersten Backend 80 und dem zweiten Backend 90, im Beispiel Magenta Voice Cloud bzw. Amazon AVS Cloud, umfasst.

Ferner umfasst die elektronische Assistenzvorrichtung 1 einen Lautsprecher 60 zum Ausgeben des ersten Ausgabeaudiostroms 32 und des zweiten Ausgabeaudiostroms 42 und ein Mikrofon 50 zum fortlaufenden Erfassen eines Umgebungsschalls und zum Bereitstellen des erfassten Umgebungsschalls als einen Eingabeaudiostrom 51.

Zu der elektronischen Assistenzvorrichtung gehören weiterhin ein sprachgesteuertes Aufweckmodul 10 zum Erkennen des ersten Aufweckworts 31 und des zweiten Aufweckworts 41 in einer in dem bereitgestellten Eingabeaudiostrom 51 erkannten Spracheingabe 100 eines Nutzers und ein Steuermodul 20 zum Erkennen eines von der ersten Assistenzanwendung 30 und von der zweiten Assistenzanwendung 40 akzeptierten Befehlsworts 120 in der erkannten Spracheingabe 100.

Das Steuermodul 20 definiert zwei oder mehr als zwei, hier lediglich beispielhaft vier Kanäle 11, 12, 13, 14, welche verschiedene Prioritäten aufweisen und jeweils eine Mehrzahl von insbesondere gleichartigen ersten und zweiten Ausgabeaudioströmen 32, 42 umfassen. Jeder Ausgabeaudiostrom 32, 42 ist ausschließlich einem Kanal 11, 12, 13, 14 aus den zwei oder mehr als zwei Kanälen 11, 12, 13, 14 zugehörig, d. h. kein Ausgabeaudiostrom 32, 42 ist zwei Kanälen 11, 12, 13, 14 zugehörig.

Die vier Kanäle 11, 12, 13, 14 umfassen einen Dialogkanal 11 mit einer höchsten Priorität, einen Telefoniekanal 12 mit einer zweithöchsten Priorität, einen Ereigniskanal 13 mit einer zweitniedrigsten Priorität und einen Inhaltskanal 14 mit einer niedrigsten Priorität. Der Dialogkanal 11 umfasst im Beispiel den von Telekom Magenta bereitgestellten Ausgabeaudiostrom 32 Dialog und die von Amazon Alexa bereitgestellten Ausgabeaudioströme 42 Alexa Dialog, Conversation. Der Telefoniekanal 12 umfasst im Beispiel den von Telekom Magenta bereitgestellten Ausgabeaudiostrom 32 DECT Telephony und den von Amazon Alexa bereitgestellten Ausgabeaudiostrom 42 Telephony. Der Ereigniskanal 13 umfasst im Beispiel die von Telekom Magenta bereitgestellten Ausgabeaudioströme 32 Timer, Pairing und die von Amazon Alexa bereitgestellten Ausgabeaudioströme 42 Alerts, Notifications. Der Inhaltskanal 14 umfasst im Beispiel die von Telekom Magenta bereitgestellten Ausgabeaudioströme 32 Radio, Bluetooth-Streaming, Spotify Connect und die von Amazon Alexa bereitgestellten Ausgabeaudioströme 42 Amazon Prime Music, Spotify via Alexa, Radio.

Das Steuermodul 20 definiert ferner für jeden definierten Kanal 11, 12, 13, 14 eine Befehlsgruppe mit von der ersten Assistenzanwendung 30 und der zweiten Assistenzanwendung 40 akzeptierten, d. h. universellen, Befehlsworten 120. Zu den universellen Befehlsworten für den Inhaltskanal 14 gehören beispielsweise "Stop", "Play", "Pause", "Resume", "Next Track", "Previous Track", "Seek Forward", "Seek Backward", "Lauter", "Leiser" und "Mute". Weiterhin definiert das Steuermodul 20 für jeden Ausgabeaudiostrom 32, 42 eine Übergangstabelle, welche jedem möglichen Zustand des Ausgabeaudiostroms 32, 42 einen oder mehrere mit dem Zustand kompatible Befehlsworte 120 zuordnet.

Die elektronische Assistenzvorrichtung 1 kann mittels eines Computerprogrammprodukts konfiguriert sein. Das Computerprogrammprodukt umfasst ein von der elektronischen Assistenzvorrichtung 1 lesbares Speichermedium mit einem in dem Speichermedium gespeicherten und von der elektronischen Assistenzvorrichtung 1 ausführbaren Programmcode. Der Programmcode veranlasst die elektronische Assistenzvorrichtung 1, das nachfolgend beschriebene Verfahren auszuführen, wenn er von einem Prozessor der Assistenzvorrichtung 1 ausgeführt wird.

Die elektronische Assistenzvorrichtung ist konfiguriert, wie folgt betrieben zu werden.

Der Lautsprecher 60 gibt einen ersten Ausgabeaudiostrom 32 in einer Vordergrundlautstärke aus, welcher von einer ausschließlich das erste Aufweckwort 31 akzeptierenden sprachgesteuerten ersten Assistenzanwendung 30 bereitgestellt wird. Das Mikrofon 50 erfasst fortlaufend einen Umgebungsschall und stellt den erfassten Umgebungsschall als einen Eingabeaudiostrom 51 bereit. Der Eingabeaudiostrom 51 umfasst Spracheingaben 100, 110 eines Nutzers.

Wenn der Nutzer irrtümlich das von der zweiten Assistenzanwendung 40 akzeptierte Aufweckwort 41, nicht aber das von der ersten Assistenzanwendung 30 akzeptierte Aufweckwort 31 ausspricht, erkennt das sprachgesteuerte Aufweckmodul 10 in einer in dem bereitgestellten Eingabeaudiostrom 51 erkannten Spracheingabe 110 des Nutzers das von der zweiten Assistenzanwendung 40 der Assistenzvorrichtung 1 ausschließlich akzeptierte zweite Aufweckwort 41 als einziges Aufweckwort und leitet die Spracheingabe 110 zu dem Steuermodul 20 weiter.

Das Steuermodul 20 erkennt in der Spracheingabe 110 ein auf das zweite Aufweckwort 41 folgendes von der ersten Assistenzanwendung 30 und von der zweiten Assistenzanwendung 40 akzeptiertes Befehlswort 120 und steuert den ersten Ausgabeaudiostrom 32 mittels der erkannten Spracheingabe 110. Dazu weckt es die den ersten Ausgabeaudiostrom 32 bereitstellende erste Assistenanwendung 30 auf und leitet einen auf das zweite Aufweckwort 41 folgenden Endabschnitt der erkannten Spracheingabe 110 an die erste Assistenzanwendung 30 weiter.

Wenn der Nutzer dagegen in korrekter Weise das von der ersten Assistenzanwendung 30 akzeptierte Aufweckwort 31 ausspricht, erkennt das sprachgesteuerte Aufweckmodul 10 in der erkannten alternativen Spracheingabe 100 des Nutzers das von der ersten Assistenzanwendung 30 ausschließlich akzeptierte erste Aufweckwort 31 als einziges Aufweckwort. Diese Alternative gehört zu einem bekannten Betriebsverfahren der elektronischen Assistenzvorrichtung 1.

Das Steuermodul 20 leitet aus zwei von jeweils ausschließlich einem Kanal 12, 14 aus den vier von dem Steuermodul 20 definierten Kanälen 11, 12, 13, 14 zugehörigen gestarteten ersten und zweiten Ausgabeaudioströmen 32, 42 denjenigen Ausgabeaudiostrom 32 dem Lautsprecher 60 zum Ausgeben in der Vordergrundlautstärke zu, dessen Kanal 12 unter allen Kanälen 12, 14 mit zumindest einem gestarteten Ausgabeaudiostrom 32, 42 die höchste Priorität, hier die definierte zweithöchste Priorität, aufweist und der unter den gestarteten Ausgabeaudioströmen 32 dieses Kanals 12 als letzter Ausgabeaudiostrom 32 gestartet wurde.

Weiterhin leitet das Steuermodul 20 aus zwei von jeweils ausschließlich einem Kanal 12, 14 aus den vier von dem Steuermodul 20 definierten Kanälen 11, 12, 13, 14 zugehörigen gestarteten ersten und zweiten Ausgabeaudioströmen 32, 42 denjenigen Ausgabeaudiostrom 42 dem Lautsprecher 60 zum Ausgeben in einer Hintergrundlautstärke zu, dessen Kanal 14 unter allen Kanälen 12, 14 mit zumindest einem gestarteten Ausgabeaudiostrom 32, 42 die zweithöchste Priorität, hier die definierte niedrigste Priorität, aufweist und der unter den gestarteten Ausgabeaudioströmen 32, 42 dieses Kanals 14 als letzter Ausgabeaudiostrom 42 gestartet wurde.

Wenn es anders als in dem gezeigten Beispiel einen Kanal 11, 12, 13, 14 mit einer dritthöchsten Priorität gibt, welchem ein erster oder zweiter Ausgabeaudiodatenstrom 32, 42 zugehörig ist, leitet das Steuermodul 20 aus drei von jeweils ausschließlich einem Kanal 11, 12, 13, 14 aus den vier von dem Steuermodul 20 definierten Kanälen 11, 12, 13, 14 zugehörigen gestarteten ersten und zweiten Ausgabeaudioströmen 32, 42 denjenigen Ausgabeaudiostrom 32, 42 dem Lautsprecher 60 zum Ausgeben in einer Nulllautstärke zu, dessen Kanal unter allen Kanälen 11, 12, 13, 14 mit zumindest einem gestarteten Ausgabeaudiostrom 32, 42 eine höchstens dritthöchste Priorität aufweist und der unter den gestarteten Ausgabeaudioströmen 32, 42 dieses Kanals als letzter Ausgabeaudiostrom 32, 42 gestartet wurde.

Das Steuermodul 20 verwaltet alle ausschließlich einem Kanal 11, 12, 13, 14 aus den vier von dem Steuermodul 20 definierten Kanälen 11, 12, 13, 14 zugehörigen gestarteten ersten und zweiten Ausgabeaudioströme 32, 42 in einem LI FO-Stapel.

### Bezugszeichenliste

- 1: elektronische Assistenzvorrichtung
- 10: Aufweckmodul
- 11: Kanal mit höchster Priorität, Dialogkanal
- 12: Kanal mit zweithöchster Priorität, Telefoniekanal
- 13: Kanal mit zweiniedrigster Priorität, Ereigniskanal
- 14: Kanal mit niedrigster Priorität, Inhaltskanal
- 20: Steuermodul
- 30: erste Assistenzanwendung
- 31: erstes Aufweckwort
- 32: erster Ausgabeaudiostrom
- 40: zweite Assistenzanwendung
- 41: zweites Aufweckwort
- 42: zweiter Ausgabeaudiostrom
- 50: Mikrofon
- 51: Eingabeaudiostrom
- 60: Lautsprecher
- 70: Kommunikationsmodul
- 80: erstes Backend
- 81: erste Sprachschnittstelle
- 90: zweites Backend
- 91: zweite Sprachschnittstelle
- 100: erste Spracheingabe
- 110: zweite Spracheingabe
- 120: Befehlswort

## Patentansprüche

1. Verfahren zum Betreiben einer elektronischen Assistenzvorrichtung (1), bei dem
- ein Lautsprecher (60) einer elektronischen Assistenzvorrichtung (1) einen von einer ausschließlich ein erstes Aufweckwort (31) akzeptierenden sprachgesteuerten ersten Assistenzanwendung (30) der Assistenzvorrichtung (1) bereitgestellten ersten Ausgabeaudiostrom (32) in einer Vordergrundlautstärke ausgibt;
- ein Mikrofon (50) der elektronischen Assistenzvorrichtung (1) fortlaufend einen Umgebungsschall erfasst und den erfassten Umgebungsschall als einen Eingabeaudiostrom (51) bereitstellt;
- ein sprachgesteuertes Aufweckmodul (10) der Assistenzvorrichtung (1) in einer in dem bereitgestellten Eingabeaudiostrom (51) erkannten Spracheingabe (110) eines Nutzers ein von einer von der ersten Assistenzanwendung (30) verschiedenen zweiten Assistenzanwendung (40) der Assistenzvorrichtung (1) ausschließlich akzeptiertes zweites Aufweckwort (41) als einziges Aufweckwort erkennt;
- ein Steuermodul (20) der elektronischen Assistenzvorrichtung (1) in der Spracheingabe (110) ein auf das zweite Aufweckwort (41) folgendes von der ersten Assistenzanwendung (30) und von der zweiten Assistenzanwendung (40) akzeptiertes Befehlswort (120) erkennt und den ersten Ausgabeaudiostrom (32) mittels der erkannten Spracheingabe (110) steuert.

2. Verfahren nach Anspruch 1, bei dem das Steuermodul (20) aus zumindest zwei von jeweils ausschließlich einem Kanal (11, 12, 13, 14) aus zwei oder mehr als zwei von dem Steuermodul (20) definierten Kanälen (11, 12, 13, 14) zugehörigen gestarteten ersten und zweiten Ausgabeaudioströmen (32, 42) denjenigen Ausgabeaudiostrom (32, 42) dem Lautsprecher (60) zum Ausgeben in der Vordergrundlautstärke zuleitet, dessen Kanal (11, 12, 13, 14) unter allen Kanälen (11, 12, 13, 14) mit zumindest einem gestarteten Ausgabeaudiostrom (32, 42) eine höchste Priorität aufweist und der unter den gestarteten Ausgabeaudioströmen (32, 42) dieses Kanals (11, 12, 13, 14) als letzter Ausgabeaudiostrom (32, 42) gestartet wurde.

3. Verfahren nach einem der Ansprüche 1 oder 2, bei dem das Steuermodul (20) aus zumindest zwei von jeweils ausschließlich einem Kanal (11, 12, 13, 14) aus zwei oder mehr als zwei von dem Steuermodul (20) definierten Kanälen (11, 12, 13, 14) zugehörigen gestarteten ersten und zweiten Ausgabeaudioströmen (32, 42) denjenigen Ausgabeaudiostrom (32, 42) dem Lautsprecher (60) zum Ausgeben in einer Hintergrundlautstärke zuleitet, dessen Kanal (11, 12, 13, 14) unter allen Kanälen (11, 12, 13, 14) mit zumindest einem gestarteten Ausgabeaudiostrom (32, 42) eine zweithöchste Priorität aufweist und der unter den gestarteten Ausgabeaudioströmen (32, 42) dieses Kanals (11, 12, 13, 14) als letzter Ausgabeaudiostrom (32, 42) gestartet wurde.

4. Verfahren nach einem der Ansprüche 1 bis 3, bei dem das Steuermodul (20) aus zumindest zwei von jeweils ausschließlich einem Kanal (11, 12, 13, 14) aus zwei oder mehr als zwei von dem Steuermodul (20) definierten Kanälen (11, 12, 13, 14) zugehörigen gestarteten ersten und zweiten Ausgabeaudioströmen (32, 42) denjenigen Ausgabeaudiostrom (32, 42) dem Lautsprecher (60) zum Ausgeben in einer Nulllautstärke zuleitet, dessen Kanal (11, 12, 13, 14) unter allen Kanälen (11, 12, 13, 14) mit zumindest einem gestarteten Ausgabeaudiostrom (32, 42) eine höchstens dritthöchste Priorität aufweist und der unter den gestarteten Ausgabeaudioströmen (32, 42) dieses Kanals (11, 12, 13, 14) als letzter Ausgabeaudiostrom (32, 42) gestartet wurde.

5. Verfahren nach einem der Ansprüche 1 bis 4, bei dem das Steuermodul (20) alle ausschließlich einem Kanal (11, 12, 13, 14) aus zwei oder mehr als zwei von dem Steuermodul (20) definierten Kanälen (11, 12, 13, 14) zugehörigen gestarteten ersten und zweiten Ausgabeaudioströme (32, 42) in einem LIFO-Stapel verwaltet.

6. Verfahren nach einem der Ansprüche 1 bis 5, bei dem ein Kommunikationsmodul (70) der Assistenzvorrichtung (1) einen von einer Assistenzanwendung (30, 40) bereitgestellten Ausgabeaudiostrom (32, 42) von einem in einem externen Netzwerk angeordneten Backend (80, 90) der Assistenzanwendung (30, 40) empfängt.

7. Elektronische Assistenzvorrichtung (1), welche eine ausschließlich ein erstes Aufweckwort (31) akzeptierende und einen ersten Ausgabeaudiostrom (32) bereitstellende sprachgesteuerte erste Assistenzanwendung (30), eine ausschließlich ein zweites Aufweckwort (41) akzeptierende und einen zweiten Ausgabeaudiostrom (42) bereitstellende von der sprachgesteuerten ersten Assistenzanwendung (30) verschiedene sprachgesteuerte zweite Assistenzanwendung (40), einen Lautsprecher (60) zum Ausgeben des ersten Ausgabeaudiostroms (32) und des zweiten Ausgabeaudiostroms (42), ein Mikrofon (50) zum fortlaufenden Erfassen eines Umgebungsschalls und zum Bereitstellen des erfassten Umgebungsschalls als einen Eingabeaudiostrom (51), ein sprachgesteuertes Aufweckmodul (10) zum Erkennen des ersten Aufweckworts (31) und des zweiten Aufweckworts (41) in einer in dem bereitgestellten Eingabeaudiostrom (51) erkannten Spracheingabe (100, 110) eines Nutzers und ein Steuermodul (20) zum Erkennen eines von der ersten Assistenzanwendung (30) und von der zweiten Assistenzanwendung (40) akzeptierten Befehlsworts (120) in der erkannten Spracheingabe (100, 110) umfasst und konfiguriert ist, ein Verfahren nach einem der Ansprüche 1 bis 6 auszuführen.

8. Assistenzvorrichtung nach Anspruch 7, bei der das Steuermodul (20) zwei oder mehr als zwei Kanäle definiert, welche verschiedene Prioritäten aufweisen und jeweils eine Mehrzahl von ersten und zweiten Ausgabeaudioströmen (32, 42) umfassen, welche jeweils ausschließlich einem Kanal (11, 12, 13, 14) aus den zwei oder mehr als zwei Kanälen (11, 12, 13, 14) zugehörig sind.

9. Assistenzvorrichtung nach Anspruch 8, bei der jeder definierte Kanal (11, 12, 13, 14) eine Mehrzahl von gleichartigen Ausgabeaudioströmen (32, 42) umfasst.

10. Assistenzvorrichtung nach einem der Ansprüche 8 oder 9, bei der das Steuermodul (20) vier Kanäle (11, 12, 13, 14) definiert, welche einen Dialogkanal (11) mit einer höchsten Priorität, einen Telefoniekanal (12) mit einer zweithöchsten Priorität, einen Ereigniskanal (13) mit einer zweitniedrigsten Priorität und einen Inhaltskanal (14) mit einer niedrigsten Priorität umfassen.

11. Assistenzvorrichtung nach einem der Ansprüche 7 bis 10, bei dem das Steuermodul (20) für jeden definierten Kanal eine Befehlsgruppe mit von der ersten Assistenzanwendung (30) und der zweiten Assistenzanwendung (40) akzeptierten Befehlsworten (120) definiert.

12. Assistenzvorrichtung nach einem der Ansprüche 7 bis 11, bei dem das Steuermodul (20) für jeden Ausgabeaudiostrom (32, 42) eine Übergangstabelle definiert, welche jedem möglichen Zustand des Ausgabeaudiostroms (32, 42) einen oder mehrere mit dem Zustand kompatible Befehlsworte (120) zuordnet.

13. Assistenzvorrichtung nach einem der Ansprüche 7 bis 12, welche ein Kommunikationsmodul (70) zum Empfangen eines Ausgabeaudiostroms (32, 42) von einem in einem externen Netzwerk angeordneten Backend (80, 90) der Assistenzanwendung (30, 40) umfasst.

14. Computerprogrammprodukt für eine elektronische Assistenzvorrichtung (1), welches ein von einer elektronischen Assistenzvorrichtung (1) lesbares Speichermedium mit einem in dem Speichermedium gespeicherten und von der elektronischen Assistenzvorrichtung (1) ausführbaren Programmcode umfasst, welcher die Assistenzvorrichtung (1) veranlasst, ein Verfahren nach einem der Ansprüche 1 bis 6 auszuführen, wenn er von einem Prozessor der Assistenzvorrichtung (1) ausgeführt wird.

## Claims

1. A method for operating an electronic assistance device (1), wherein
- a loudspeaker (60) of the electronic assistance device (1) outputs, at a foreground volume, a first output audio stream (32) provided by a voice-controlled first assistance application (30) of the assistance device (1), the first assistance application (30) exclusively accepting a first wake-up word (31);
- a microphone (50) of the electronic assistance device (1) continuously detects an ambient sound and provides the detected ambient sound as an input audio stream (51);
- a voice-controlled wake-up module (10) of the assistance device (1) recognizes, in a voice input (110) of a user recognized in the provided input audio stream (51), a second wake-up word (41) as sole wake-up word, the second wake-up word (41) exclusively accepted by a second assistance application (40) of the assistance device (1) that is different from the first assistance application (30);
- a control module (20) of the electronic assistance device (1) recognizes in the voice input (110) a command word (120) following the second wake-up word (41), which is accepted by the first assistance application (30) and by the second assistance application (40) and controls the first output audio stream (32) by means of the recognized speech input (110).

2. The method according to claim 1, wherein the control module (20) supplies, among at least two first and second output audio streams (32, 42), each started and belonging exclusively to one or two channels (11, 12, 13, 14) among two or more channels (11, 12, 13, 14) defined by the control module (20), that output audio stream (32, 42) to the loudspeaker (60) for outputting at the foreground volume whose channel (11, 12, 13, 14) has a highest priority among all channels (11, 12, 13, 14) with at least one started output audio stream (32, 42) and which was started as the last output audio stream (32, 42) among the output audio streams (32, 42) of this channel (11, 12, 13, 14).

3. The method according to either of claims 1 or 2, wherein the control module (20) supplies, among at least two first and second output audio streams (32, 42) each started and belonging exclusively to one or two channels (11, 12, 13, 14) among two or more channels (11, 12, 13, 14) defined by the control module (20), that output audio stream (32, 42) to the loudspeaker (60) for outputting at a background volume whose channel (11, 12, 13, 14) has a second-highest priority among all channels (11, 12, 13, 14) with at least one started output audio stream (32, 42) and which was started as the last output audio stream (32, 42) among the output audio streams (32, 42) of this channel (11, 12, 13, 14).

4. The method according to any of claims 1 to 3, wherein the control module (20) supplies, among at least two first and second output audio streams (32, 42) each started and belonging exclusively to one or two channels (11, 12, 13, 14) among two or more channels (11, 12, 13, 14) defined by the control module (20), that output audio stream (32, 42) to the loudspeaker (60) for outputting at zero volume whose channel (11, 12, 13, 14) has at least a third-highest priority among all channels (11, 12, 13, 14) with at least one started output audio stream (32, 42) and which was started as the last output audio stream (32, 42) among the output audio streams (32, 42) of this channel (11, 12, 13, 14).

5. The method according to any of claims 1 to 4, wherein the control module (20) manages in a LIFO stack all started first and second output audio streams (32, 42) belonging to exclusively one channel (11, 12, 13, 14) among two or more channels (11, 12, 13, 14) defined by the control module (20).

6. The method according to any of claims 1 to 5, wherein a communications module (70) of the assistance device (1) receives an output audio stream (32, 43) provided by an assistance application (30, 40) from a back-end (80, 90) of the assistance application (30, 40), which is disposed in an external network.

7. An electronic assistance device (1) comprising a voice-controlled first assistance application (30) which exclusively accepts a first wake-up word (31) and provides a first output audio stream (32), a voice-controlled second assistance application (40) that is different from the voice-controlled first assistance application (30) which exclusively accepts a second wake-up word (41) and provides a second output audio stream (42), a loudspeaker (60) for outputting the first output audio stream (32) and the second output audio stream (42), a microphone (50) for continuously detecting an ambient sound and for providing the detected ambient sound as an input audio stream (51), a voice-controlled wake-up module (10) for detecting the first wake-up word (31) and the second wake-up word (41) in a voice input (100, 110) of a user detected in a provided input audio stream (51), and a control module (20) for detecting a command word (120) accepted by the first assistance application (30) and by the second assistance application (40) in the detected voice input (100, 110) and configured for executing a method according to any one of claims 1 to 6.

8. The assistance device according to claim 7, wherein the control module (20) defines two or more channels that have different priorities and, respectively, comprise a plurality of first and second output audio streams (32, 42), which respectively belong exclusively to one channel (11, 12, 13 14) of the two or more channels (11, 12, 13, 14).

9. The assistance device according to claim 8, wherein each defined channel (11, 12, 13, 14) comprises a plurality of similar output audio streams (32, 42).

10. The assistance device according to any of claims 8 or 9, wherein the control module (20) defines four channels (11, 12, 13, 14) which comprise a dialog channel (11) with a highest priority, a telephony channel (12) with a second-highest priority, an event channel (13) with a second-lowest priority, and a content channel (14) with a lowest priority.

11. The assistance device according to any of claims 7 to 10, wherein for each defined channel, the control module (20) defines a command group with command words (120) accepted by the first assistance application (30) and the second assistance application (40).

12. The assistance device according to any of claims 7 to 11, wherein the control module (20) defines, for every possible status of the output audio stream (32, 42), a transition table which assigns one or more command words (120) compatible with the status to each potential status of the output audio stream (32, 42).

13. The assistance device according to any of claims 7 to 12, comprising a communications module (70) for receiving an output audio stream (32, 42) from a back-end (80, 90) of the assistance application (30, 40), which is disposed in an external network.

14. A computer program product for an electronic assistance device (1), comprising a storage medium, readable by an electronic assistance device (1), with a program code stored in the storage medium and executable by the electronic assistance device (1), which causes the assistance device (1) to execute a method according to any of claims 1 to 6 when it is executed by a processor of the assistance device (1).

## Revendications

1. Procédé de fonctionnement d'un dispositif d'aide électronique (1), dans lequel
- un haut-parleur (60) d'un dispositif d'aide électronique (1) émet, à un volume de premier plan, un premier flux audio de sortie (32) fourni par une première application d'aide (30) à commande vocale du dispositif d'aide (1) acceptant exclusivement un premier mot de réveil (31);
- un microphone (50) du dispositif d'aide électronique (1) détecte en continu un son ambiant et fournit le son ambiant détecté, sous la forme d'un flux audio d'entrée (51) ;
- un module de réveil (10) à commande vocale du dispositif d'aide (1) reconnaît, dans une entrée vocale (110) d'un utilisateur reconnue dans le flux audio d'entrée (51) fourni, un deuxième mot de réveil (41) accepté exclusivement par une deuxième application d'aide (40) du dispositif d'aide (1), différente de la première application d'aide (30), comme étant le seul mot de réveil ;
- un module de commande (20) du dispositif d'aide électronique (1) reconnaît dans l'entrée vocale (110) un mot d'instruction (120) suivant le deuxième mot de réveil (41) accepté par la première application d'aide (30) et par la deuxième application d'aide (40) et commande le premier flux audio de sortie (32) au moyen de l'entrée vocale (110) reconnue.

2. Procédé selon la revendication 1, dans lequel le module de commande (20) fournit, parmi au moins deux premier et deuxième flux audio de sortie (32, 42) lancés et associés chacun exclusivement à un canal (11, 12, 13, 14) parmi deux ou plusieurs canaux (11, 12, 13, 14) définis par le module de commande (20), le flux audio de sortie (32, 42) dont le canal (11, 12, 13, 14) présente une priorité la plus élevée parmi tous les canaux (11, 12, 13, 14) dotés d'au moins un flux audio de sortie (32, 42) lancé et qui a été lancé comme dernier flux audio de sortie (32, 42) parmi les flux audio de sortie (32, 42) lancés de ce canal (11, 12, 13, 14) au haut-parleur (60) pour une sortie au volume de premier plan.

3. Procédé selon l'une des revendications 1 ou 2, dans lequel le module de commande (20) fournit, parmi au moins deux premier et deuxième flux audio de sortie (32, 42) lancés et associés chacun exclusivement à un canal (11, 12, 13, 14) parmi deux ou plusieurs canaux (11, 12, 13, 14) définis par le module de commande (20), le flux audio de sortie (32, 42) dont le canal (11, 12, 13, 14) présente une deuxième priorité la plus élevée parmi tous les canaux (11, 12, 13, 14) dotés d'au moins un flux audio de sortie (32, 42) lancé et qui a été lancé comme dernier flux audio de sortie (32, 42) parmi les flux audio de sortie (32, 42) lancés de ce canal (11, 12, 13, 14) au haut-parleur (60) pour une sortie à un volume de fond.

4. Procédé selon l'une des revendications 1 à 3, dans lequel le module de commande (20) fournit, parmi au moins deux premier et deuxième flux audio de sortie (32, 42) lancés et associés chacun exclusivement à un canal (11, 12, 13, 14) parmi deux ou plusieurs canaux (11, 12, 13, 14) définis par le module de commande (20), le flux audio de sortie (32, 42) dont le canal (11, 12, 13, 14) présente tout au plus une troisième priorité la plus élevée parmi tous les canaux (11, 12, 13, 14) dotés d'au moins un flux audio de sortie (32, 42) lancé et qui a été lancé comme dernier flux audio de sortie (32, 42) parmi les flux audio de sortie (32, 42) lancés de ce canal (11, 12, 13, 14) au haut-parleur (60) pour une sortie à un volume nul.

5. Procédé selon l'une des revendications 1 à 4, dans lequel le module de commande (20) gère tous les premier et deuxième flux audio de sortie (32, 42) lancés, associés exclusivement à un canal (11, 12, 13, 14) parmi deux ou plusieurs canaux (11, 12, 13, 14) définis par le module de commande (20), dans une pile LIFO.

6. Procédé selon l'une des revendications 1 à 5, dans lequel un module de communication (70) du dispositif d'aide (1) reçoit un flux audio de sortie (32, 42) fourni par une application d'aide (30, 40) depuis un back-end (80, 90) de l'application d'aide (30, 40) situé dans un réseau externe.

7. Dispositif d'aide électronique (1), comprenant une première application d'aide (30) à commande vocale acceptant exclusivement un premier mot de réveil (31) et fournissant un premier flux audio de sortie (32), une deuxième application d'aide (40) à commande vocale, différente de la première application d'aide (30) à commande vocale, acceptant exclusivement un deuxième mot de réveil (41) et fournissant un deuxième flux audio de sortie (42), un haut-parleur (60) destiné à émettre le premier flux audio de sortie (32) et le deuxième flux audio de sortie (42), un microphone (50) destiné à détecter en continu un son ambiant et à fournir le son ambiant détecté sous la forme d'un flux audio d'entrée (51), un module de réveil (10) à commande vocale destiné à reconnaître le premier mot de réveil (31) et le deuxième mot de réveil (41) dans une entrée vocale (100, 110) d'un utilisateur reconnue dans le flux audio d'entrée (51) fourni, et un module de commande (20) destiné à reconnaître un mot d'instruction (120), accepté par la première application d'aide (30) et par la deuxième application d'aide (40) dans l'entrée vocale (100, 110) reconnue et ledit dispositif étant configuré de manière à exécuter un procédé selon l'une des revendications 1 à 6.

8. Dispositif d'aide selon la revendication 7, dans lequel le module de commande (20) définit deux ou plusieurs canaux présentant différentes priorités et comprenant respectivement une pluralité de premier et deuxième flux audio de sortie (32, 42), chacun étant associé exclusivement à un canal (11, 12, 13, 14) parmi les deux ou plusieurs canaux (11, 12, 13, 14).

9. Dispositif d'aide selon la revendication 8, dans lequel chaque canal (11, 12, 13, 14) défini comprend une pluralité de flux audio de sortie (32, 42) similaires.

10. Dispositif d'aide selon l'une des revendications 8 ou 9, dans lequel le module de commande (20) définit quatre canaux (11, 12, 13, 14) comprenant un canal de dialogue (11) avec une priorité la plus élevée, un canal téléphonique (12) avec une deuxième priorité la plus élevée, un canal d'événement (13) avec une deuxième priorité la moins élevée et un canal de contenu (14) avec une priorité la plus basse.

11. Dispositif d'aide selon l'une des revendications 7 à 10, dans lequel le module de commande (20) définit pour chaque canal défini un groupe d'instructions comportant des mots d'instruction (120) acceptés par la première application d'aide (30) et la deuxième application d'aide (40).

12. Dispositif d'aide selon l'une des revendications 7 à 11, dans lequel le module de commande (20) définit pour chaque flux audio de sortie (32, 42) un tableau de transition associant à chaque état possible du flux audio de sortie (32, 42) un ou plusieurs mots d'instruction (120) compatibles avec l'état.

13. Dispositif d'aide selon l'une des revendications 7 à 12, comprenant un module de communication (70) destiné à recevoir un flux audio de sortie (32, 42) provenant d'un back-end (80, 90) de l'application d'aide (30, 40) situé dans un réseau externe.

14. Produit de programme informatique pour un dispositif d'aide électronique (1), comprenant un support de mémoire lisible par un dispositif d'aide électronique (1) avec un code de programme stocké dans le support de mémoire et exécutable par le dispositif d'aide électronique (1), qui amène le dispositif d'aide (1) à exécuter un procédé selon l'une des revendications 1 à 6, lorsqu'il est exécuté par un processeur du dispositif d'aide (1).
